Europäisches Patentamt

European Patent Office

Office européen des brevets

(19)

(11) Veröffentlichungsnummer : **0 434 664 A1**

# (12) EUROPÄISCHE PATENTANMELDUNG

(21) Anmeldenummer : 90890334.7

(22) Anmeldetag : 18.12.90

(51) Int. Cl.⁵ : **B23P 15/00, B21H 7/18, F01L 3/02**

(30) Priorität : **18.12.89 AT 2874/89**

(43) Veröffentlichungstag der Anmeldung :
**26.06.91 Patentblatt 91/26**

(84) Benannte Vertragsstaaten :
**AT DE FR GB IT**

(71) Anmelder : **SCHOELLER-BLECKMANN
Ges.m.b.H..
Hauptstrasse 2
A-2634 Ternitz (AT)**

(72) Erfinder : **Schaupp, Wolfram, Dipl.-Ing.
Boldrinigasse 14
A-2500 Baden (AT)**

(74) Vertreter : **Haffner, Thomas M., Dr. et al
Patentanwaltskanzlei Dipl.-Ing. Adolf
Kretschmer Dr. Thomas M. Haffner
Schottengasse 3a
A-1014 Wien (AT)**

(54) Verfahren zum Herstellen von Haltenuten.

(57)  Bei einem Verfahren zum Herstellen von Haltenuten in Ventilschäften, insbesondere für Ventile für Verbrennungskraftmaschinen, werden die Nuten durch Walzen bei Temperaturen unter 700° am Ventilschaft angebracht, wodurch eine vereinfachte Herstellung mit einer wesentlich geringeren Anzahl von Arbeitsschritten bei Erzielung der geforderten Festigkeitseigenschaften unter Einhaltung der erforderlichen Toleranzen ermöglicht wird.

EP 0 434 664 A1

## VERFAHREN ZUM HERSTELLEN VON HALTENUTEN

Die Erfindung bezieht sich auf ein Verfahren zum Herstellen von Haltenuten in Ventilschäften, insbesondere für Ventile für Verbrennungskraftmaschinen.

Ventile für Kolbenmaschinen werden in der Regel durch Fließpressen oder durch Warmstauchen von abgelängten Rundstäben hergestellt, wobei die Stäbe im Durchmesser angenähert auf Fertigmaß des Schaftes bearbeitet werden und nachfolgend im umzuformenden Bereich erwärmt und gestaucht werden. Nach der fertigen Bearbeitung des Ventilkopfstückes werden entsprechend den Spezifikationen des Motorenherstellers am Ventilschaftende und im Bereich der Ventilbefestigung unter Einhaltung enger Toleranzen die erforderlichen Anschlußstellen für die Festlegung von Federtellern und die Ventilbefestigung vorgesehen, wobei gleichzeitig die Ventilbefestigung in der Regel so ausgebildet ist, daß die Möglichkeit einer Ventildrehung verbleibt. Die erforderlichen Endbearbeitungsschritte werden gegenwärtig durch Schleifen oder Drehen vorgenommen, wobei eine derartige Herstellungsweise die laufende Nachjustierung der Bearbeitungsmaschinen erfordert. Anschließend an das Drehen bzw. Schleifen von Rillen oder Nuten ist es zumeist erforderlich, die geforderte Festigkeit durch nachfolgende Härtungsbehandlung zu erzielen.

Die Erfindung zielt nun darauf ab, die Fertigstellung eines Ventils, und im besonderen die Herstellung der Haltenuten für Ventile für Verbrennungskraftmaschinen, zu vereinfachen und mit einer wesentlich geringeren Anzahl von Arbeitsschritten unmittelbar ein Endprodukt zu erzielen, welches die geforderten Festigkeitseigenschaften bei gleichzeitiger Einhaltung der geforderten Toleranzen ermöglicht. Zur Lösung dieser Aufgabe besteht das erfindungsgemäße Verfahren im wesentlichen darin, daß die Nuten durch Walzen bei Temperaturen unter 700°C am Ventilschaft angebracht werden. Während es bei den Bearbeitungsschritten Schleifen oder Drehen zu lokalen Überhitzungen und unerwünschten Temperaturspannungen kommen kann und weiters in der Folge anschließend an derartige Bearbeitungsschritte eine Härtungsbehandlung erforderlich wird, hat es sich überraschenderweise gezeigt, daß, wenn die Haltenuten durch Walzen bei Temperaturen unter 700°C am Ventilschaft angebracht werden, unmittelbar unter Einhaltung der Toleranzen, welche im Hundertstelmillimeter-Bereich liegen, ein Endprodukt erzielt wird, das keine nachfolgende Härtungsbehandlung mehr erfordert. Die Kaltverformung bzw. Warmverformung führt hiebei zu einer Härtung oder zumindest zur Aufrechterhaltung der ursprünglichen Festigkeitseigenschaften und die durch Walzen bei Temperaturen unter 700°C erzielbaren Toleranzen sind teilweise sogar besser als die nach einer Wärmebehandlung zum Zwecke der Härtung erzielbaren Toleranzen im Bereich der Haltenuten. Ein derartiges Walzen von Nuten ist auch in bezug auf die Justierung der Walzwerkzeuge weniger aufwendig als eine Bearbeitung durch Schleifen oder Drehen. In vorteilhafter Weise kann hiebei so vorgegangen werden, daß die Haltenuten durch Rollen aus keramischen Werkstoffen oder Hartlegierungen profiliert werden. Derartige Hartlegierungen bzw. keramische Werkstoffe erlauben die Anwendung hoher Drucke, wobei durch die Verformungsarbeit gleichzeitig eine Härtung im Bereich der Haltenuten erzielt werden kann. Die Profilierung erfolgt hiebei in der Regel zwischen zwei rotierenden Walzen, welche die den jeweiligen Herstellerspezifikationen entsprechenden Nuten durch Walzen am Ventilschaft anzubringen erlauben. Bei derartigen Walzvorgängen können gleichzeitig mehrere Nuten aufgebracht werden und üblicherweise werden ein bis drei Nuten in einem Walzvorgang in vorbestimmten Abständen gleichzeitig am Ventilschaft angebracht.

Mit Rücksicht auf den Umstand, daß für Einlaßventile und für Auslaßventile von Verbrennungskraftmaschinene unterschiedlich legierte Stähle zum Einsätz gelangen, gestaltet sich die Vorwärmung für derartige Ventile unterschiedlich. Im Falle von Einlaßventilen, welche thermisch nicht so stark belastet sind wie Auslaßventile, kommen in der Regel niedrig legierte Stähle zum Einsatz und es ist in diesen Fällen vorteilhaft, das Verfahren so durchzuführen, daß die Haltenuten für Einlaßventile ohne Vorwärmung gewalzt werden. Durch das Kaltwalzen kommt es unmittelbar zu einer Kaltverfestigung und die erzielbaren Toleranzen sind in diesem Falle überaus klein. Auch bei Verwendung hochlegierter, insbesondere Cr-Ni-legierter Stähle, wie sie für Auslaßventile zum Einsatz gelangen, läßt sich die geforderte, überaus geringe Toleranz dann einhalten, wenn Temperaturen unter 700°C als Vorwärmtemperatur gewählt werden, wobei vorzugsweise so vorgegangen wird, daß die Haltenuten für hochlegierte, insbesondere Cr-Ni legierte Auslaßventile bei Temperaturen zwischen 450°C und 650°C gewalzt werden.

### Ansprüche

1. Verfahren zum Herstellen von Haltenuten in Ventilschäften, insbesondere für Ventile für Verbrennungskraftmaschinen, dadurch gekennzeichnet, daß die Nuten durch Walzen bei Temperaturen unter 700°C am Ventilschaft angebracht werden.

2. Verfahren nach Anspruch 1, dadurch gekennzeichnet, daß die Haltenuten durch Rollen aus keramischen Werkstoffen oder Hartlegierungen profiliert werden.

3. Verfahren nach Anspruch 1 oder 2, dadurch gekennzeichnet, daß die Haltenuten für Einlaßventile ohne Vorwärmung gewalzt werden.

4. Verfahren nach Anspruch 1 oder 2, dadurch gekennzeichnet, daß die Haltenuten für hochlegierte, insbesondere Cr-Ni legierte Auslaßventile bei Temperaturen zwischen 450°C und 650°C gewalzt werden.

Europäisches
Patentamt

# EUROPÄISCHER RECHERCHENBERICHT

Nummer der Anmeldung

EP    90 89 0334

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | PATENT ABSTRACTS OF JAPAN<br>vol. 4, no. 41 (M-5)(523) 29 März 1980,<br>& JP-A-55 14160 (SANNOHASHI) 31 Januar 1980,<br>* das ganze Dokument *<br>--- | 1, 3 | B23P15/00<br>B21H7/18<br>F01L3/02 |
| X | PATENT ABSTRACTS OF JAPAN<br>vol. 10, no. 51 (M-457)(2108) 28 Februar 1986,<br>& JP-A-60 201016 (FUJI) 11 Oktober 1985,<br>* das ganze Dokument *<br>--- | 1, 3 | |
| A | PATENT ABSTRACTS OF JAPAN<br>vol. 13, no. 376 (M-862) 21 August 1989,<br>& JP-A-1 130807 (KAWASAKI) 23 Mai 1989,<br>* das ganze Dokument *<br>--- | 2 | |
| A | FR-A-1127565 (GROSDEMOUGE)<br>* Seite 2, Zeilen 5 - 11; Figur 4 *<br>------ | 4 | |
| | | | **RECHERCHIERTE SACHGEBIETE (Int. Cl.5 )**<br><br>B23P<br>B21H<br>F01L<br>B21B |

Der vorliegende Recherchenbericht wurde für alle Patentansprüche erstellt

| Recherchenort | Abschlußdatum der Recherche | Prüfer |
|---|---|---|
| DEN HAAG | 18 MAERZ 1991 | LEFEBVRE L.J.F. |